# EUROPEAN PATENT SPECIFICATION

(11) **EP 4 213 081 B1**
(45) Date of publication and mention of the grant of the patent: **25.11.2026**
(21) Application number: 23152210.3
(22) Date of filing: 18.01.2023
(51) Int. Cl.: G06Q 10/04, G06Q 10/02, G06N 3/02, G06Q 50/14

(54) **DEMAND FORECASTING FOR TRANSPORTATION SERVICES**
BEDARFSVORHERSAGE FÜR TRANSPORTDIENSTE
PRÉVISION DE DEMANDE POUR DES SERVICES DE TRANSPORT

(30) Priority: 18.01.2022 US 202263300544 P
(43) Date of publication of application: 19.07.2023
(73) Proprietor: OneSky Flight LLC, Richmond Heights, OH 44143 (US)
(72) Inventor: NAGALLA, Durga, Richmond Heights, OH 44143 (US); CAMPOBASSO, Michael, Richmond Heights, OH 44143 (US); LANPHEAR, William, Richmond Heights, OH 44143 (US); WISE, Tyler, Richmond Heights, OH 44143 (US); HAGERTY, Zack, Richmond Heights, OH 44143 (US); BLAKE, James, Richmond Heights, OH 44143 (US)
(74) Representative: Murgitroyd & Company

(56) References cited:
- IMANAKA KODAI ET AL: "Predicting Air Ticket Demand using Deep Neural Networks", 2021 IEEE INTERNATIONAL CONFERENCE ON BIG DATA (BIG DATA), IEEE, 15 December 2021 (2021-12-15), pages 2901 - 2908, XP034065568, DOI: 10.1109/BIGDATA52589.2021.9671440

## Description

### CROSS-REFERENCE TO RELATED APPLICATION

This application claims priority to US Provisional Application No. 63/300,544, filed January 18, 2022.

### TECHNICAL FIELD

This application relates generally to computing processes and machine-learning techniques for demand forecasting for transportation services.

### BACKGROUND

Developments in electronic devices and communication have allowed ease of reserving transportation services (e.g., aircraft charters, airline carriers, rental cars, for-hire drivers, mass transit). For example, a user can search for a flight leaving on a selected departure date through a client device. The client device may query a booking system of the travel provide, or issue a query to a search engine operated by a travel service provider or a travel agency, for available flights on the selected departure date, and receive a list of available flights or carriers for the selected departure date in return. The client device may present the list of available flights or carriers to the user and allow the user to select and reserve a flight. Other transportation service industries and third-party agencies and aggregation services (e.g., Expedia^{®}, Kayak^{®}) implement similar travel-related systems and software applications.

Travel service companies typically set prices through any number of algorithms based on various factors, such as supply-and-demand, historic demand, and date-of-departure. Due to the volume of data and need for real time pricing mechanisms, travel companies employ large-scale computing systems to query internal data records and calculate and report the prices.

### SUMMARY

Existing travel industry systems employ price forecasting based on historic data analytics and travel itinerary recommendation or personalization engines. These prior approaches, however, are based on conventional big data analytics and statistical analysis, and such approaches merely address pricing or the traveler's itinerary.

Travel service systems could be improved by employing machine-learning architectures to better predict demand and manage supply, particularly for the types of travel services that generally have limited supply, experience acute demand spikes or drops (e.g., seasonal fluctuations, particular annual events at a location, time-of-day fluctuations). Moreover, demand and bookings often do not change linearly with respect to the number of days remaining before the travel date (sometimes referred to as "departure date" or "date of departure"). As such, travel service systems could be further improved with systems and methods implementing a machine-learning architectures that account for non-linear fluctuations in demand.

Embodiments disclosed herein may address shortcomings in the art and may provide additional or alternative improvements or benefits. The embodiments include systems and methods implementing machine-learning architectures for forecasting demand for travel services (e.g., aircraft charters, airline carriers, rental cars, for-hire drivers, mass transit). The embodiments implement a machine-learning architecture including a neural network architecture that comprises a set of neural network models tailored for a corresponding set of dates prior to the a departure date, and updating or adjusting the set of neural network models. By implementing different neural network models, non-linear change in demands or booking statuses for transportation services for the range of dates before the departure date can be predicted in an accurate manner. Each neural network model may be uniquely trained for the particular day-before-travel using historic data for the particular date over several years and/or using historic data for the same day-before-travel.

Embodiments may further include software for manually or automatically constructing or tailoring the neural network models. Before, during, or after training the neural network models, the software may execute any number of simulations of the machine-learning architecture that applies each neural network model on historic, simulated, or live (real-life) data and outputs one or more performance metrics for some or all of the neural network models. Based on the performance metrics, the software may automatically, or an administrative user could manually, adjust or update the neural network model to improve accuracy or efficiency. Updating or adjusting a neural network model may include determining a set of configuration values, and training the neural network model according to the determined set of configuration values. Examples of a set of configuration values of a neural network model include a number of layers, a number of neurons, and an activation function. According to the set of configuration values, a neural network model can be constructed and a set of configuration parameters, such as weight values and/or bias values, can be adjusted through training.

In some embodiments, a computer-implemented method comprises receiving, by a computer, a plurality of historic travel records for a plurality of upcoming dates relative to an upcoming travel date; generating, by the computer, a plurality of neural network models of a machine-learning architecture, the plurality of neural network models including a neural network model associated with a corresponding upcoming date of the plurality of dates; applying, by the computer, each neural network model on a set of one or more historic travel records for the upcoming date corresponding to the neural network model to train each of the neural network models; receiving, by the computer, input travel data associated with a client device, the input travel data comprising one or more attributes including the upcoming travel date; and generating, by the computer, a report indicating a predicted demand for the upcoming travel date and each of upcoming dates of the plurality of dates before the upcoming travel date by applying the one or more neural network models on the input travel data associated with the client device.

In some embodiments, a system comprises a computer comprising one or more processors configured to: receive a plurality of historic travel records for a plurality of upcoming dates relative to an upcoming travel date; generate a plurality of neural network models of a machine-learning architecture, the plurality of neural network models including a neural network model associated with a corresponding upcoming date of the plurality of dates; apply each neural network model on a set of one or more historic travel records for the upcoming date corresponding to the neural network model to train each of the neural network models; receive input travel data associated with a client device, the input travel data comprising one or more attributes including the upcoming travel date; and generate a report indicating a predicted demand for the upcoming travel date and each of upcoming dates of the plurality of dates before the upcoming travel date by applying the one or more neural network models on the input travel data associated with the client device.

In embodiments, the system may comprise one of more of the following features.

When training each of the neural network models the computer may be further configured to determine for the particular neural network model a corresponding set of configuration parameters based upon the set of one or more historic event records for the upcoming date corresponding to the neural network model.

When training each of the neural network models the computer may be further configured to: determine an accuracy between a predicted output and an expected output of the particular neural network model as applied to the set of one or more historic travel records for the upcoming date; and adjust at least one configuration parameter of the neural network model based upon the accuracy of the prediction of the first neural network model failing to satisfy a threshold value for training.

The computer may be further configured to construct each neural network model of the plurality of neural network models according to a corresponding set of configuration values, wherein the corresponding set of configuration values includes at least one of a number of layers, a number of neurons, and an activation function of the each neural network model.

For each neural network model, the computer may determine the corresponding set of configuration values by executing at least one optimization function.

When constructing the neural network model according to the corresponding set of configuration values the computer may be further configured to: determine, during a simulation operation, an accuracy of a prediction of the first neural network model by applying the first neural network model on a candidate set of configuration values.

When constructing the neural network model according to the corresponding set of configuration values the computer may be further configured to: adjust at least one configuration value of the neural network model based upon an accuracy of the prediction of the first neural network model failing to satisfy a threshold value for a simulation operation.

The computer may be further configured to receive the set of configuration values via a user interface from a client device.

The plurality of historic travel records for training the neural network models may comprise at least one attribute including at least one of: an event scheduled at the upcoming travel date, a particular day of a week, a particular week of a year, a holiday, or a pandemic status of a location.

The neural network model for a particular upcoming date may include at least one of a convolutional neural network, a deep neural network, a recurrent neural network, and a long short-term memory recurrent neural network.

It is to be understood that both the foregoing general description and the following detailed description are exemplary and explanatory and are intended to provide further explanation of the invention as claimed.

### BRIEF DESCRIPTION OF THE DRAWINGS

The accompanying drawings constitute a part of this specification, illustrate an embodiment of the invention, and, together with the specification, explain the invention.
**FIG. 1** illustrates a computer system for reserving transportation service, in accordance with an embodiment.
**FIG. 2** illustrates a demand forecast system, in accordance with an embodiment.
**FIG. 3** illustrates an example input data to train a neural network model, in accordance with an embodiment.
**FIG. 4** illustrates an example plot showing predicted booking statuses for a range of dates before a departure date, in accordance with an embodiment.
**FIG. 5** illustrates a method of generating a report indicating a forecast of booking statuses through neural network models, in accordance with an embodiment.
**FIG. 6** illustrates a method of determining different sets of configuration values for neural network models, in accordance with an embodiment.
**FIG. 7** illustrates a method of determining a set of configuration values for a neural network model, in accordance with an embodiment.

### DETAILED DESCRIPTION

Reference will now be made to the exemplary embodiments illustrated in the drawings, and specific language will be used here to describe the same. It will nevertheless be understood that no limitation of the scope of the invention is thereby intended. Alterations and further modifications of the inventive features illustrated here, and additional applications of the principles of the inventions as illustrated here, which would occur to a person skilled in the relevant art and having possession of this disclosure, are to be considered within the scope of the invention.

Various embodiments disclosed herein are related to a system and a method for generating a forecast of demands or booking statuses for transportation services (e.g., aircraft scheduling, rental car scheduling) or other resource scheduling sensitive to demand. The embodiments implement a machine-learning architecture including a neural network architecture comprising a set of neural network models for a corresponding set of days before a departure date, and updating or adjusting the set of neural network models. The neural network models may implement one or more types of neural network architecture or machine-learning techniques or functions, including convolutional neural networks (CNNs), deep neural networks (DNNs), recurrent neural networks, and long short-term memory recurrent neural networks (LSTM RNNs), among others. Each neural network model can predict a demand or a booking status for a transportation service at a corresponding day before the departure date. For example, the neural network architecture includes 60 neural network models trained to predict changing demands or booking statuses of a transportation service for a 60-day window prior to the departure date. In this example, the neural network architecture comprises the 60 neural network models trained specifically for each particular day or pre-configured set of days (each week, each 4-day set) prior to the departure day. Where the neural network architecture is configured for demand forecasting 60 days prior to the departure date, the neural network architecture may comprise a neural network model trained for 60 days from departure ("60-day neural network model"), another neural network model trained for 59 days from departure ("59-day neural network model"), another neural network model trained for 58 days from departure ("58-day neural network model), and so on. In some cases the neural network architecture would include a 61st neural network model for the day of departure ("0-day neural network model"). In this way, embodiments implement various neural network models to account for the non-linear change in demand or booking statuses for transportation services for the range of days before the departure date, thereby improving the accuracy of the demand forecasted for the departure date and for the intermediate dates.

The example embodiments provided herein implement the machine-learning architectures for predicting demand or managing the reservations, scheduling, and bookings for aircraft transportation, but embodiments are not so limited. Embodiments may implement machine-learning architectures to predict demand or managing reservations, scheduling, and bookings for various types of transportation services, various different carriers within a particular transportation service industry, or various different transportation service offerings within a particular company.

Each neural network model can be trained by providing input data with attributes. Input data may indicate a booking status for a particular date before a departure date. Additionally, the input data may indicate or include other attributes, such as an event scheduled at the departure date, a particular day of a week, a particular week of a year, a holiday, or a pandemic status, etc. By providing input data with attributes to train neural network models, the neural network models can predict demands or booking statuses in view of such attributes. For example, a neural network model can predict an increase in demand, if a super bowl event is scheduled on or near the departure date. For example, a neural network model can predict a decrease in demand, if a number of pandemic cases reported in a particular place or country has increased. As another example, a neural network model may be trained to predict an increase in demand to particular cities at a time of year (e.g., winter to skiing destinations) or around a particular event on or near the departure date (e.g., increased demand for an increasing number of days preceding New Year's Eve where New York is the destination).

Embodiments may further include software for manually or automatically constructing or tailoring the neural network models. Before, during, or after training the neural network models, the software may execute any number of simulations of the machine-learning architecture that applies each neural network model on historic, simulated, or live (real-life) data and outputs one or more performance metrics for some or all of the neural network models. Based on the performance metrics, the software may automatically, or an administrative user could manually, adjust or update the neural network model to improve accuracy or efficiency. Updating or adjusting a neural network model may include determining a set of configuration values, and training the neural network model according to the determined set of configuration values. Examples of a set of configuration values of a neural network model include a number of layers, a number of neurons, and an activation function. According to the set of configuration values, a neural network model can be constructed and a set of configuration parameters, such as hyper-parameters, weight values, and/or bias values, can be adjusted through training.

In some implementations, the neural network models can be updated or adjusted in groups or in sets in a continuous manner. For example, a first set of configuration values for a first set of neural network models corresponding to a first range of dates before a departure date can be determined, and a second set of configuration values for a second set of neural network models corresponding to a second range of dates before the departure date can be determined. The first set of configuration values and the second set of configuration values can be determined in parallel to reduce computation time. After determining the first set of configuration values and the second set of configuration values, a third set of configuration values for a third set of neural network models corresponding to a third range of dates before the departure date can be determined, and a fourth set of configuration values for a fourth set of neural network models corresponding to a fourth range of dates before the departure date can be determined.

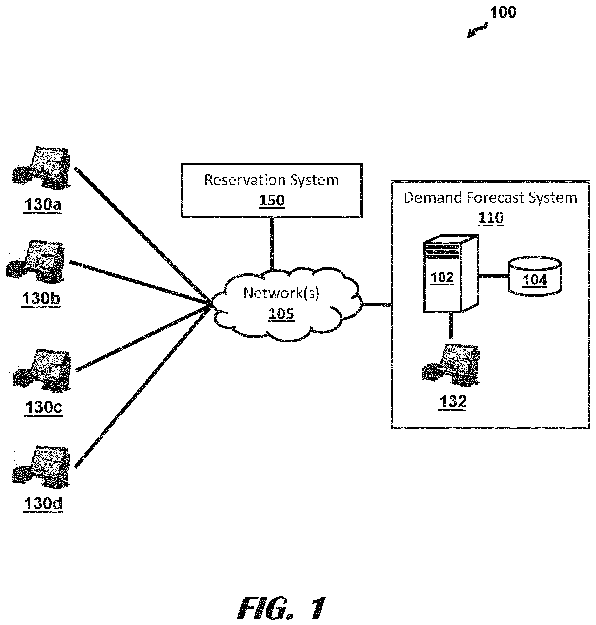

**FIG. 1** illustrates a computer system **100** for reserving transportation service, in accordance with an embodiment. In some embodiments, the system **100** includes a reservation system **150,** any number of client computing devices **130** (e.g., client devices **130a-130d**), and a demand forecast system **110,** which communicate via one or more communication network **105.** The demand forecast system **110** includes one or more servers **102,** one or more databases **104,** and any number of admin devices **132.** Embodiments may comprise additional or alternative components or omit certain components from those of **FIG. 1****,** and still fall within the scope of this disclosure. For example, the system **100** may include a third-party system that communicates with the client devices **130,** the reservation system **150,** the demand forecast system **110,** or any combination thereof, through the network **105.** Embodiments may include or otherwise implement any number of devices capable of performing the various features and tasks described herein. For example, **FIG. 1** shows the reservation system **150** and the demand forecast system **110** as distinct computing systems, though the reservation system **150** and the demand forecast system **110** may be implemented as a single system or operated by a single entity.

The various components of the system **100,** the reservation system **150,** the demand forecast system **110** (including the server **102,** database **104,** and admin device **132**), and the client devices **130** may be connected with each other via hardware and software components of one or more system networks **105** or internal networks. Examples of such networks **105** include, but are not limited to, Local Area Network (LAN), Wireless Local Area Network (WLAN), Metropolitan Area Network (MAN), Wide Area Network (WAN), and the Internet. The communication over any particular network **105** may be performed in accordance with various communication protocols, such as Transmission Control Protocol and Internet Protocol (TCP/IP), User Datagram Protocol (UDP), and IEEE communication protocols, among others.

The client device **130** and admin device **132** are computing devices operated by a user or administrative user of the demand forecast system **110.** The client device **130** and admin device **132** include any computing device having computing hardware (e.g., processors, non-transitory memory) and software for performing the various processes and tasks described herein. Non-limiting examples of the client device **130** or the admin device **132** include smart phones, servers, desktops, laptops, tablets, and the like.

The client device **130** executes software accessing the reservation system **150** or demand forecast system **110** and allows the user to reserve a travel service. For example, the client device **130** presents a user interface allowing the user to search for a transportation service (e.g., flights). The client device **130** may receive a user selection of a destination and/or a departure date, and query the reservation system **150** for available transportation services meeting the user selection. From the reservation system **150,** the client device **130** may receive a list of available transportation services with associated fare amounts or fees, and present the list of available transportation services with the associated fare amounts or fees to the user through a user interface. Through the user interface, the client device **130** may receive a user selection of a desired transportation service, and notify the user selection to the reservation system **150** to execute or complete the reservation of the transportation service.

The admin device **132** executes software for accessing and configuring the components of the demand forecast system **110,** including the server **102** and the database **104.** The admin device **132** may, for example, allow the administrative user to select or enter (i.e., code, program) the various functional configurations of the machine-learning architecture, which the admin device **132** provides to the server **102** to construct or adjust the components of the machine-learning architecture. In some implementations, the admin device **132** receives various performance metrics for the machine-learning architecture (e.g., accuracy of neural network models, efficiency of neural network models), as generated by the server **102** when executing simulations of the machine-learning architecture. The admin device **132** may present the performance metrics to the administrative user via a user interface. The administrative user may further adjust the configurations of the machine-learning architecture using the user interface. Additionally or alternatively, the server **102** may automatically adjust the configurations of the machine-learning architecture and the neural network models based on the performance metrics, which the server **102** may execute before, during, or after training the neural network models.

The reservation system **150** includes one or more computing devices (e.g., server computers, desktop computers) that execute software that assist users with reserving a transportation service. The reservation system **150** may be operated by a transportation service provider, a travel agency, or a third-party agency. The reservation system **150** may receive, from the client device **130** a request for a list of available transportation services for a particular destination and/or the departure date. In response to the request, the reservation system **150** may identify available transportation services for the particular destination and/or the departure date and associated fare amounts or fees for each transportation service. The reservation system **150** may generate a list indicating the available transportation services with associated fare amounts or fees, and provide the list to the client device **130.** The reservation system **150** may receive a user selection of the desired transportation service and process the reservation of the transportation service by booking the transportation service for the client device **130** or by notifying the transportation service provider.

The server **102** of the demand forecast system **110** is a computing device that predicts demands for transportation services. In some cases, the demand forecast system **110** may be operated by the same entity that operates the reservation system **150.** Alternatively, the demand forecast system **110** may be operated by a different entity that operates the reservation system **150.** The server **102** obtains prior records of bookings or reservations of transportation services from the client devices **130,** the database **104** of the demand forecast system **110,** and/or external database of the reservation system **150,** and implements neural network models according to the prior records to predict future demands or booking statuses of transportation services. Each neural network model may predict a demand or booking status for a corresponding day before a departure date. For example, a first neural network model may be configured and trained to predict a demand or booking status ten days before the departure date, and a second neural network model may predict a demand or booking status nine days before the departure date. Hence, by implementing different neural network models, the server **102** may implement a machine-learning architecture that better determines predicted demands or booking statuses for a range of dates before the departure date by accounting for non-linear fluctuations in the demand. The server **102** of the demand forecast system **110** generates a report containing demand prediction data indicating the predicted demands or booking statuses for the date of departure and each intermediate day as outputted by the machine-learning architecture, and transmits the report to the reservation system **150.** Based on the report, the reservation system **150** can adjust fare amounts or fees for transportation services or allocate transportation services to or from other companies (e.g., allocate aircraft or other vehicle, request or borrow aircraft or other vehicle)

The database **104** of the demand forecast system **110** may be hosted on any computing device of the demand forecast system **110** comprising non-transitory machine-readable storage media, which may include the server **102** or other computer device. The database **104** may store various configurations and parameters of the layers and functions of the machine-learning architecture, such as the number and types of functions performed by the neural network models or the set of parameters (e.g., trained hyper-parameters or weights) of the neural network models. The database **104** may further store historic, simulated, or live travel data records of various types, which in some cases the database **104** stores with training labels for training the machine-learning architecture. The server **102** may query database **104** and apply the machine-learning architecture against the relevant sets of travel data records during training or simulation operations. The server **102** may then tune the set of parameters (e.g., hyper-parameters or weights) of the neural network models to improve the accuracy of the neural network models using the training labels. For instance, the server **102** may tune or adjust one or more parameters of a neural network model when a predicted demand output generated by the neural network model does is inaccurate or fails an accuracy threshold with respect to an expected output indicated by the training labels, where the server **102** references attributes of the training labels to determine the expected output and the accuracy. Additionally or alternatively, the server **102** may automatically adjust the functions performed by the neural network models, such as adjusting the number of neurons or changing the activation functions, based upon the performance metrics of the neural network models when applied to the travel data records in the database **104.**

In some embodiments, computing devices of the system **100,** such as a reservation server of the reservation system **150,** or the server **102** or admin device **132** of the demand forecast system **110,** may perform any number of downstream operations and/or transmit the forecasting results to computing devices of one or more downstream transportation systems. For instance, the server **102** (or other computing device of the system **100**) may determine the forecasted demand for a particular date and apply that forecast demand output against resource data to determine resource allocation requirements for the particular date. As an example, the server **102** may determine the forecast demand for a particular transportation service (e.g., flight for a particular departure-arrival pairing) on a particular date. The server **102** may then query one or more databases (e.g., database **104**) to determine a number of resources (e.g., number of planes) currently allocated for the service (e.g., planes allocated for the particular flight itinerary or departure airport). The database **104** may further include additional data about the available transportation services, such as information about current or prior reservation itineraries. Using the forecast demand output for a particular date and the information about the transportation services, the server **102** of the demand forecast system **110** or device of the downstream system may identify a surplus or shortfall in available transportation on a particular date.

The server **102** may transmit a request or instructions to the downstream systems to reallocate the resources in advance of the particular date, based upon the forecasted demand. For example, the server **102** (or other computing device) may determine that the number of planes allocated on the particular date to a particular itinerary or departure airport falls short of the forecast demand or falls short of a threshold deficiency amount. In this example, the server **102** may automatically transmit a request to allocate airplanes to one or more downstream scheduling or reservation systems, where the request indicates information about the airplanes that should be allocated to allocated to the departure airport. As another example, the server **102** (or other computing device) may determine that the number of planes allocated on the particular date to the particular itinerary or departure airport exceeds the forecast demand or satisfies a threshold surplus amount. In this example, the server **102** may broadcast an advertisement to allocate airplanes to one or more downstream scheduling or reservation systems, where the request indicates information about the airplanes available to be reallocated from a particular departure airport.

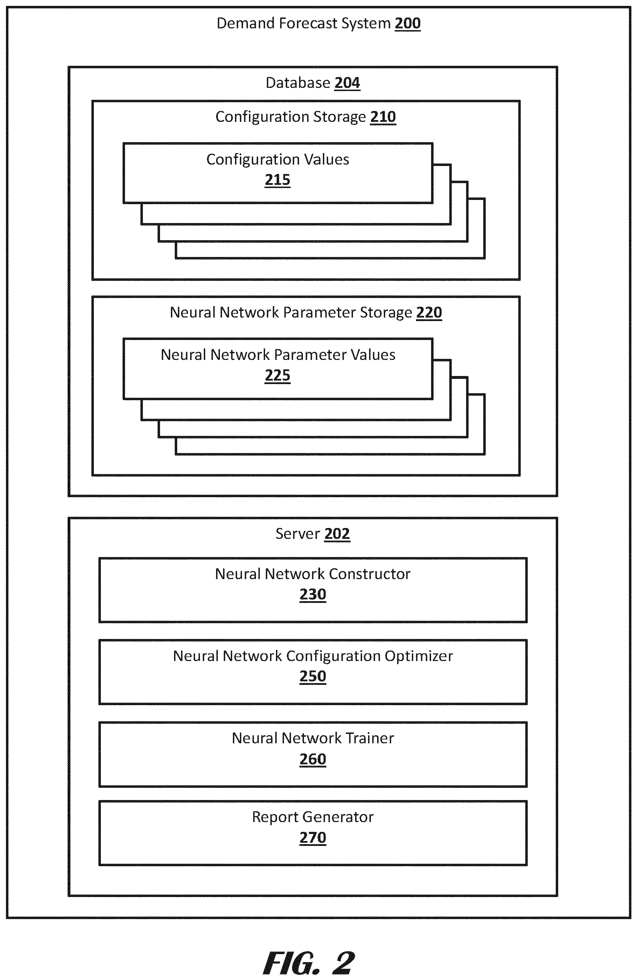

**FIG. 2** illustrates components of a demand forecast system **200,** in accordance with an embodiment. The demand forecast system **200** includes a database **204** comprising non-transitory, machine-readable memory including a configuration storage **210** and a neural network parameter storage **220.** The demand forecast system **200** further includes a server **202** comprising one or more processors configured to execute various types of software, including a neural network constructor **230,** a neural network configuration optimizer **250,** a neural network trainer **260,** and a report generator **270.** These components may operate together to implement a set of neural network models to predict demands or booking statuses for transportation services, and adjust or update the set of neural network models corresponding to each of the days prior to travel. In some embodiments, the demand forecast system **200** includes more, fewer, or different components than shown in **FIG. 2****.**

The configuration storage **210** of the database **204** is a component that stores one or more sets of configuration values **215** for functions or layers of a machine-learning architecture executed by the server **202.** A set of configuration values **215** may be associated with a corresponding neural network model of the machine-learning architecture. Examples of a set of configuration values **215** of a neural network model include a number of layers, a number of neurons, and an activation function.

The neural network parameter storage **220** of the database **204** is a component that stores one or more neural network parameter values **225** (also referred to as "parameter values **225"** herein). A set of parameter values **225** may be associated with a corresponding neural network model or other functions or layers of the machine-learning architecture executed by the server **202.** Examples of a set of parameter values **225** of a neural network model include hyper-parameters, weight values, and/or bias values.

The server **202** executes a neural network constructor **230** that generates or constructs aspects of certain layers or functions that define one or more neural network models. In some cases, the neural network constructor **230** generates or adjusts the aspects of the neural network models based upon inputs or instructions received from an admin device configuring the particular neural network models. Additionally or alternatively, in some cases, the neural network constructor **230** operates in conjunction with the neural network configuration optimizer **250** to automatically generate or adjust the aspects of the neural network models based on performance metrics (e.g., prediction accuracy, operational efficiency) determined by the server **202** as compared to one or more corresponding threshold values. The neural network constructor **230** and neural network configuration optimizer **250** may, for example, increase or decrease a number of neurons or change the activation function of a certain neural network model when the prediction accuracy or efficiency fails to satisfy a corresponding threshold. To construct a neural network model, the neural network constructor **230** may retrieve a set of configuration values **215** of the neural network model from the configuration storage **210,** and retrieve a set of parameter values **225** of the neural network model from the neural network parameter storage **220.** Alternatively, the neural network constructor processor **230** may receive the configuration values **215** and/or the set of parameter values **225** from an admin device via a user interface. According to the set of configuration values **215** and the parameter values **225,** the neural network constructor **230** can implement or construct a neural network model. For example, the neural network constructor **230** may implement a neural network model having a number of layers and a number of neurons with activation functions as indicated by the configuration values **215.** For example, the neural network constructor **230** may set weight values or bias values as indicated by the parameter values **225.** In case a set of configuration values **215** of a neural network model does not exist, the neural network constructor **230** may implement or construct the neural network model according to a default set of configuration values **215.** Similarly, in case a set of parameter values **225** of a neural network model does not exist, the neural network constructor **230** may implement or construct the neural network model according to a default set of parameter values **225.**

The neural network configuration optimizer **250** executed by the server **202** is a component that determines, for different neural network models, corresponding sets of configuration values **215** and/or parameter values **215.** In one approach, the neural network configuration optimizer **250** determines multiple sets of configuration values **215** of neural network models associated with continuous dates. The neural network configuration optimizer **250** may determine two or more sets of configuration values **215** in parallel, to reduce computation time. For example, the neural network configuration optimizer **250** may determine a first set of configuration values for a first set of neural network models corresponding to 60 to 51 days before a departure date, while determining a second set of configuration values for a second set of neural network models corresponding to 50 to 41 days before the departure date. Then, the neural network configuration optimizer **250** may determine a third set of configuration values for a third set of neural network models corresponding to 40 to 31 days before a departure date, while determining a fourth set of configuration values for a fourth set of neural network models corresponding to 30 to 21 days before the departure date.

The neural network configuration optimizer **250** may determine, for a neural network model, a set of configuration values **215** including a number of layers, a number of neurons, and an activation function. In one example, the neural network configuration optimizer **250** may determine the set of configuration values **215** through a Bayesian optimization. For example, the neural network configuration optimizer **250** may obtain, for a neural network model, a candidate set of configuration values. The candidate set of configuration values may be an existing set of configuration values **215** or an initial set of configuration values **215** from the configuration storage **210.** The neural network configuration optimizer **250** may cause the neural network constructor **230** to implement or construct the neural network model according to the candidate set of configuration values **215.** The neural network configuration optimizer **250** may also cause the neural network trainer **260** to train the neural network model to adjust the parameter values **225** (e.g., weight values or bias values). The neural network configuration optimizer **250** may determine whether the accuracy of the output or prediction by the neural network model exceeds a threshold value or not. In response to the accuracy of the output or prediction by the neural network model not exceeding the threshold value, the neural network configuration optimizer **250** may adjust the candidate set of configuration values **215,** and repeat the process. In one aspect, the candidate set of configuration values **215** are altered or adjusted through a guided learning, such that the neural network model constructed according to the adjusted candidate set of configuration values **215** can generate an output or prediction with higher accuracy. In response to the accuracy of the output or prediction by the neural network model exceeding the threshold value, the neural network configuration optimizer **250** may store the candidate set of configuration values as the set of configuration values for the neural network model.

The neural network trainer **260** is an operational function performed by the server 202 for the machine-learning architecture, when the server trains the neural network models to determine parameter values (e.g., weight values or bias values). In one approach, to train a neural network model, the report generator **270** causes the neural network constructor **230** to implement or construct the neural network model. The neural network trainer **260** may apply a test input to the neural network model to obtain a test output, and compare the test output with a target output value (or actual output for the test input). The neural network trainer **260** may determine, modify or adjust parameter values **225** (e.g., weights values or bias values) according to the comparison, such that the neural network model can generate an output that is close (e.g., ±5%) to the target output value (or actual output for the test input).

The report generator **270** is a component that generates a report indicating the predicted demands or booking statuses of a transportation service for a range of dates before the departure date. In one approach, the report generator **270** causes the neural network constructor **230** to implement or construct different neural network models associated with the range of dates before the departure date. The report generator **270** may apply, as an input, any event scheduled at the departure date, a particular day of a week, a particular week of a year, a holiday, or a pandemic status to the neural network models. Each neural network model may output forecast of demands or booking status for a corresponding date before the departure date, according to the input. The report generator **270** may compile outputs of the neural network models, and generate the report indicating the predicted demands or booking statuses of the transportation service in a graph form, a table form, or any format.

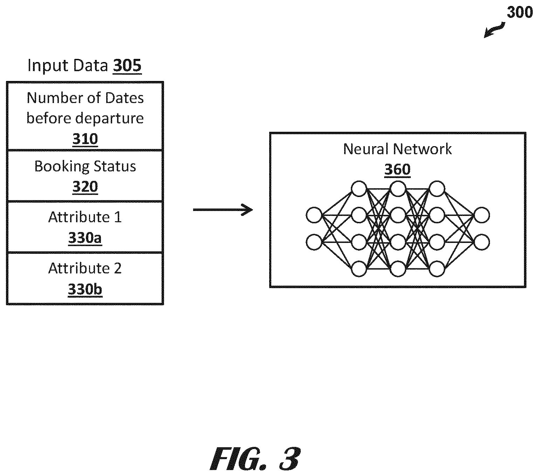

**FIG. 3** illustrates a block diagram showing dataflow in a system **300** receiving input data **305** and executing software to apply a neural network **360** on the input data **305** during a training operation (e.g., neural network trainer **260** operation of **FIG. 2**). A computing device of the system **300** ingests and provides the input data **305** to the neural network model **360** to train the neural network model **360.** In one example, the neural network model **360** may be configured to predict demand of a transportation service for a particular date before the departure date. The computing device trains the neural network model **360** by providing the input data **305** to the neural network model **360** as an input. The input data **305** may include a number of dates **310** before a departure date, a booking status or a booking record **320** on that date, and additional attributes **330a, 330b.** Attributes **330a, 330b** may be a particular day of a week, a particular week of a year, a holiday, or a pandemic status (e.g., number of recent cases). The input data **305** may include more or different attributes. By providing the input data **305** including the attributes **330a, 330b** to train neural network models, the neural network model **360** can predict demands or booking statuses in view of such attributes **330a, 330b.** For example, the neural network model **360** can predict an increase in demand to particular cities at a time of year (e.g., winter to skiing destinations) or around a particular event (e.g., the Holidays to New York) on or near the departure date. As another example of attributes **330a, 330b,** the neural network model **360** can predict a decrease in demand, if a number of pandemic cases reported in a particular place or country has increased.

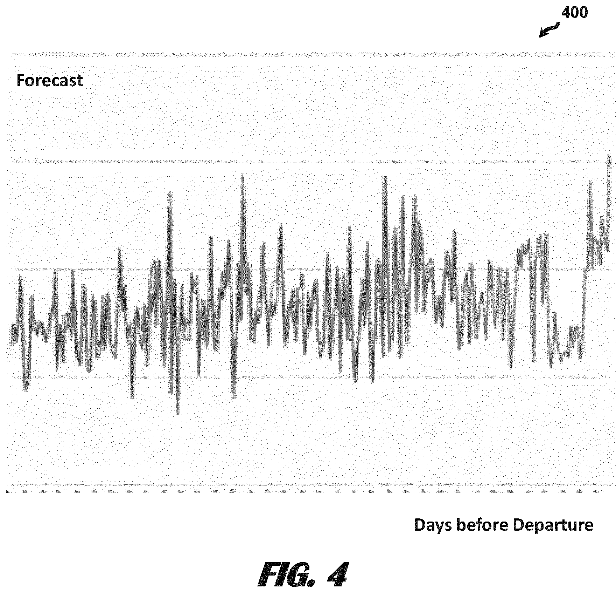

**FIG. 4** illustrates an example plot **400** showing predicted booking statuses for a range of dates before a departure date, in accordance with an embodiment. In one example, the report generator **270** may cause the neural network constructor **230** to construct different neural network models for each date before the departure date, and cause each neural network model to predict a booking status. The report generator **270** may compile the outputs of the neural network models and generate a report in a graph form as shown in the plot **400.** Additionally or alternatively, the report generator **270** may generate the report in a table form. The demand forecast may allow, for example, the reservation system **150** to adaptively change fare amounts or fees to reduce loss or increase gain, allocate excess transportation services to other companies, or borrow transportation services from other companies.

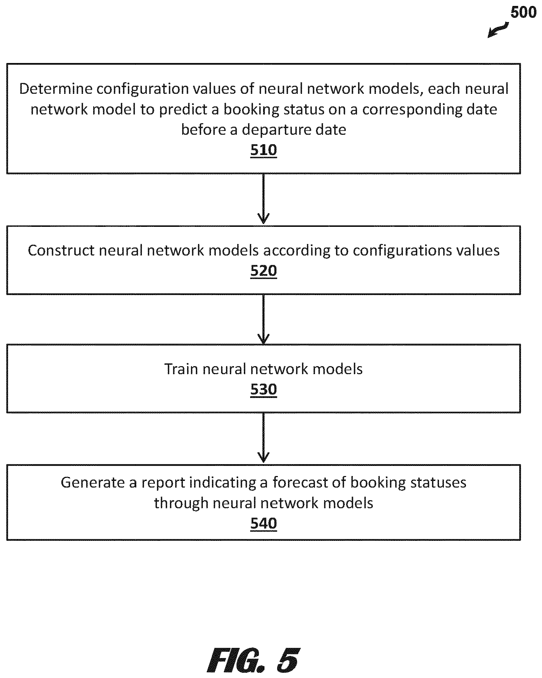

**FIG. 5** illustrates a method **500** of generating a report indicating a forecast of booking statuses through neural network models, in accordance with an embodiment. The method **500** may be performed by the demand forecast system (e.g., by a server or computer of the demand forecast system). In some embodiments, the method **500** is performed by other entities. In some embodiments, the method **500** includes more, fewer, or different steps than shown in **FIG. 5****.** For example, the steps **520, 530** may be omitted, or performed as part of or in conjunction with the step **510** or step **540.**

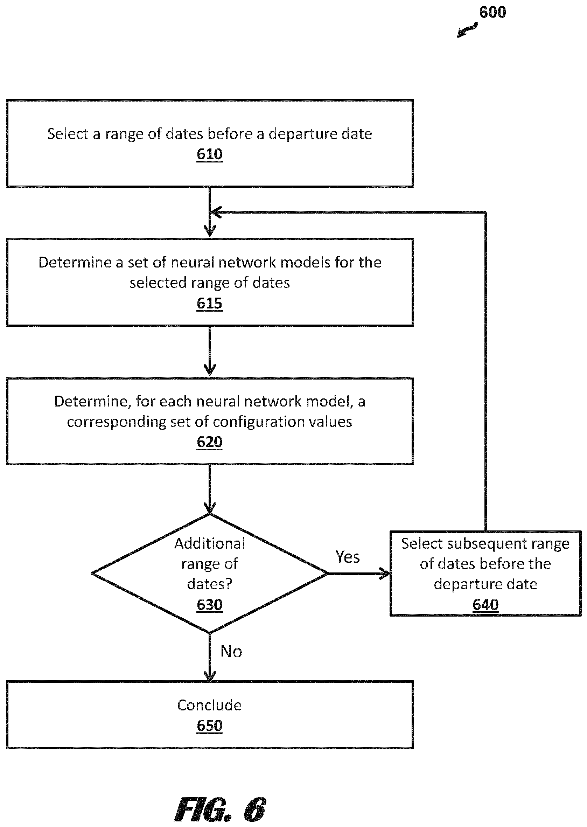

At step **510,** the demand forecast system determines configuration values of neural network models. Each neural network model may be configured to predict a booking status on a corresponding date before a departure date. Examples of a set of configuration values of a neural network model include a number of layers, a number of neurons, and an activation function. The demand forecast system may determine the configuration values as described below with respect to **FIGS. 6-7****.** The demand forecast system may store, for each neural network model, a corresponding set of configuration values by a configuration storage.

At step **520,** the demand forecast system constructs neural network models, according to configurations values. The demand forecast system may construct each neural network model, according to a number of layers, a number of neurons, and an activation function as specified by the corresponding set of configuration values.

At step **530,** the demand forecast system trains neural network models. In one approach, the demand forecast system may train a neural network model by applying a test input to the neural network model to obtain a test output, and comparing the test output with a target output value (or actual output for the test input). The demand forecast system may determine, modify or adjust parameter values (e.g., weights values or bias values) according to the comparison, such that the neural network model can generate an output that is close to the target output value (or actual output for the test input). In one aspect, training neural network models can be performed in the step **510,** while determining configuration values. After determining the configuration values (e.g., number of layers, number of neurons, a type of activation function), the demand forecast system can train the neural network models to fine-tune the parameters value to further improve the accuracy of the outputs of the neural network models.

At step **540,** the demand forecast system generates a report indicating a forecast of booking statuses through a set of neural network models for a range of dates before the departure date. In one approach, the demand forecast system causes each of the set of neural network models to output predicted booking status on a corresponding date within the range of dates. The demand forecast system may apply, as an input, any event scheduled at the departure date, a particular day of a week, a particular week of a year, a holiday, or a pandemic status to the neural network models. Each neural network model may output forecast of demands or booking status for a corresponding date before the departure date, according to the input. The demand forecast system may compile outputs of the neural network models, and generate the report indicating the predicted demands or booking statuses of the transportation service in a graph form, in a table form, or in any format. The demand forecast system may provide the report to the reservation system.

**FIG. 6** illustrates a method **600** of determining different sets of configuration values for neural network models, in accordance with an embodiment. The method **600** may be performed as part of the step **510** in **FIG. 5****.** The method **600** may be performed by the demand forecast system. In some embodiments, the method **600** is performed by other entities. In some embodiments, the method **600** includes more, fewer, or different steps than shown in **FIG. 6****.**

At step **610,** the demand forecast system selects a range of dates before a departure date. A range of dates may be a number of consecutive dates before the departure date. For example, the demand forecast system may select ten consecutive dates (e.g., 60 to 51 days before the departure date).

At step **615,** the demand forecast system determines a set of neural network models for the selected range of dates. Each neural network model may be configured to generate as an output a predicted demand or booking status on a corresponding date from the range of dates before the departure date. For example, for a range of 10 consecutive dates selected, the demand forecast system may select 10 corresponding neural network models.

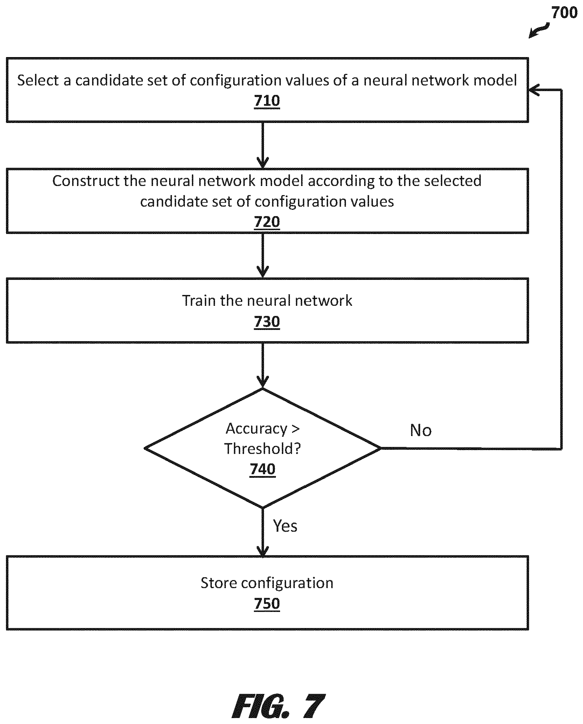

At step **620,** the demand forecast system determines, for each neural network model, a corresponding set of configuration values. Examples of the set of configuration values of a neural network model include a number of layers, a number of neurons, and an activation function of the neural network model. For each neural network model, the demand forecast system may determine the set of configuration values through a Bayesian optimization. Example process of determining a set of configuration values for a neural network model is provided below with respect to **FIG. 7****.**

At step **630,** the demand forecast system determines whether configuration values of neural network models for an additional range of dates should be determined or not. At step **640,** if configuration values of neural network models for an additional range of dates should be determined, the demand forecast system may select a subsequent range of dates before the departure date, and proceed to the step **615.** For example, after determining the configuration values of neural network models for ten consecutive dates (e.g., 60 to 51 days before the departure date), the demand forecast system may determine the subsequent ten consecutive dates (e.g., 50 to 41 days before the departure date). At step **650,** if no additional configuration values of neural network models should be determined, the demand forecast system may conclude the method **600.**

**FIG. 7** illustrates a method **700** of determining a set of configuration values of a neural network model, in accordance with an embodiment. The method **700** may be performed as part of the step **620** in **FIG. 7****.** The method **700** may be performed by the demand forecast system. In some embodiments, the method **700** is performed by other entities. In some embodiments, the method **700** includes more, fewer, or different steps than shown in **FIG. 7****.** For example, the step **730** may be omitted, or performed as part of or in conjunction with a different step.

At step **710,** the demand forecast system selects a candidate set of configuration values of a neural network model. The candidate set of configuration values may be an existing set of configuration values or an initial set of configuration values from the configuration storage.

At step **720,** the demand forecast system may implement or construct a neural network model according to the candidate set of configuration values. The demand forecast system may implement or construct the neural network model according to a set of parameter values (e.g., weight values or bias values) of the neural network model. The set of parameter values may be an existing set of parameter values or an initial set of parameter values from the neural network parameter storage.

At step **730,** the demand forecast system may train the neural network. In one approach, the demand forecast system may train a neural network model by applying a test input to the neural network model to obtain a test output, and comparing the test output with a target output value (or actual output for the test input). The demand forecast system may determine, modify or adjust parameter values (e.g., weights values or bias values) according to the comparison, such that the neural network model can generate an output that is close to the target output value (or actual output for the test input). The demand forecast system may train the neural network model for a predetermined number of times, or until the accuracy of the prediction or output of the neural network model does not improve.

At step **740,** the demand forecast system may test the accuracy of the prediction of the booking status or output of the neural network. For example, the demand forecast system may apply a test input to the neural network model to obtain a test output, and compare the test output with a target output value (or actual output for the test input). At step **750,** if the accuracy is higher than a threshold value, then the demand forecast system may store the candidate set of configuration values as the set of configuration values for the neural network model. If the accuracy is less than the threshold value, then the demand forecast system may proceed to the step **710** and select a different candidate set of configuration values. For example, the demand forecast system may alter the number of layers, the number of neurons, and/or select a different activation function. Through the iterative process as shown in the method **700,** a set of configuration values allowing the neural network model to generate output with high accuracy can be determined.

The foregoing method descriptions and the process flow diagrams are provided merely as illustrative examples and are not intended to require or imply that the steps of the various embodiments must be performed in the order presented. The steps in the foregoing embodiments may be performed in any order. Words such as "then," "next," etc., are not intended to limit the order of the steps; these words are simply used to guide the reader through the description of the methods. Although process flow diagrams may describe the operations as a sequential process, many of the operations can be performed in parallel or concurrently. In addition, the order of the operations may be re-arranged. A process may correspond to a method, function, procedure, subroutine, subprogram, or the like. When a process corresponds to a function, the process termination may correspond to a return of the function to a calling function or a main function.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code, it being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that is accessible by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. "Disk" and "disc", as used herein, include compact disc (CD), laser disc, optical disc, digital versatile disc (DVD), floppy disk, and Blu-ray disc formats, wherein "disks" reproduce data magnetically, while "discs" reproduce data optically with lasers. Combinations of the above should also be included within the scope of computer-readable media. Additionally, the operations of a method or algorithm may reside as one or any combination or set of codes and/or instructions on a non-transitory, processor-readable medium and/or computer-readable medium, which may be incorporated into a computer program.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

## Claims

1. A computer-implemented method comprising:
receiving, by a computer, a plurality of historic travel records for a plurality of upcoming dates relative to an upcoming travel date;
generating, by the computer, one or more function layers of a plurality of neural network models of a machine-learning architecture in accordance with a plurality of configurations and a plurality of configuration parameters from at least one of an admin device or a parameter storage, the plurality of configurations for constructing the function layers of the neural network models including a corresponding upcoming date of the plurality of dates;
applying, by the computer, each neural network model on a set of one or more historic travel records for the upcoming date corresponding to the neural network model and corresponding training accuracy threshold to train the neural network model generate a predicted demand for the upcoming date corresponding to the neural network model;
receiving, by the computer, input travel data associated with a client device, the input travel data comprising one or more attributes including the upcoming travel date; and
generating, by the computer, a report for display at a graphical user interface of the client device indicating a predicted demand for the upcoming travel date and each of upcoming dates of the plurality of dates before the upcoming travel date by applying the one or more neural network models on the input travel data associated with the client device.

2. The method according to claim 1, wherein training each of the neural network models includes determining, by a computer, for the particular neural network model a corresponding set of configuration parameters based upon the set of one or more historic travel records for the upcoming date corresponding to the neural network model.

3. The method according to claim 2, wherein training the particular neural network model includes:
determining, by the computer, an accuracy between a predicted output and an expected output of the particular neural network model as applied to the set of one or more historic travel records for the upcoming date; and
adjusting, by the computer, at least one configuration parameter of the neural network model based upon the accuracy of the prediction of the first neural network model failing to satisfy a threshold value for training.

4. The method according to claim 1, further comprising constructing, by the computer, each neural network model of the plurality of neural network models according to a corresponding set of configuration values, wherein the corresponding set of configuration values includes at least one of a number of layers, a number of neurons, and an activation function of the each neural network model.

5. The method according to claim 4, wherein, for each neural network model, the computer determines the corresponding set of configuration values by executing at least one optimization function.

6. The method according to claim 4, wherein constructing the neural network model according to the corresponding set of configuration values includes:
determining, by the computer performing a simulation operation, an accuracy of a prediction of the first neural network model by applying the first neural network model on a candidate set of configuration values.

7. The method according to claim 4, wherein constructing the neural network model according to the corresponding set of configuration values includes:
adjusting, by the computer, at least one configuration value of the neural network model based upon an accuracy of the prediction of the first neural network model failing to satisfy a threshold value for a simulation operation.

8. The method according to claim 4, further comprising receiving the set of configuration values via a user interface from a client device.

9. The method according to claim 1, wherein the plurality of historic travel records for training the neural network models comprises at least one attribute, including at least one of: an event scheduled at the upcoming travel date, a particular day of a week, a particular week of a year, a holiday, or a pandemic status of a location.

10. The method of claim 1, wherein the neural network model for a particular upcoming date comprises at least one of a convolutional neural network, a deep neural network, a recurrent neural network, and a long short-term memory recurrent neural network.

11. A system comprising:
a computer comprising one or more processors configured to:
receive a plurality of historic travel records for a plurality of upcoming dates relative to an upcoming travel date;
generate one or more function layers of a plurality of neural network models of a machine-learning architecture in accordance with a plurality of configurations and a plurality of configuration parameters from at least one of an admin device or a parameter storage, the plurality of configurations for constructing the function layers of the neural network models including a corresponding upcoming date of the plurality of dates;
apply each neural network model on a set of one or more historic travel records for the upcoming date corresponding to the neural network model and corresponding training accuracy threshold to train the neural network model generate a predicted demand for the upcoming date corresponding to the neural network model;
receive input travel data associated with a client device, the input travel data comprising one or more attributes including the upcoming travel date; and
generate a report for display at a graphical user interface of the client device indicating a predicted demand for the upcoming travel date and each of upcoming dates of the plurality of dates before the upcoming travel date by applying the one or more neural network models on the input travel data associated with the client device.

## Patentansprüche

1. Ein rechnerimplementiertes Verfahren, das Folgendes beinhaltet:
Empfangen, durch einen Rechner, einer Vielzahl von historischen Reiseaufzeichnungen für eine Vielzahl von bevorstehenden Datumsangaben relativ zu einer bevorstehenden Reisedatumsangabe;
Erzeugen, durch den Rechner, einer oder mehrerer Funktionsschichten einer Vielzahl von neuronalen Netzwerkmodellen einer Maschinenlernarchitektur gemäß einer Vielzahl von Konfigurationen und einer Vielzahl von Konfigurationsparametern von mindestens einem von einer Administratorvorrichtung oder einem Parameterspeicher, wobei die Vielzahl von Konfigurationen zum Konstruieren der Funktionsschichten der neuronalen Netzwerkmodelle eine entsprechende bevorstehende Datumsangabe der Vielzahl von Datumsangaben umfasst;
Anwenden, durch den Rechner, jedes neuronalen Netzwerkmodells auf einen Satz einer oder mehrerer historischer Reiseaufzeichnungen für die bevorstehende Datumsangabe, die dem neuronalen Netzwerkmodell entspricht, und eine entsprechende Trainingsgenauigkeitsschwelle, um das neuronale Netzwerkmodell darauf zu trainieren, einen vorhergesagten Bedarf für die bevorstehende Datumsangabe, die dem neuronalen Netzwerkmodell entspricht, zu erzeugen;
Empfangen, durch den Rechner, von Eingabereisedaten, die mit einer Client-Vorrichtung assoziiert sind, wobei die Eingabereisedaten ein oder mehrere Attribute beinhalten, die die bevorstehende Reisedatumsangabe umfassen; und
Erzeugen, durch den Rechner, eines Berichts zur Anzeige auf einer grafischen Benutzerschnittstelle der Client-Vorrichtung, der einen vorhergesagten Bedarf für die bevorstehende Reisedatumsangabe und jede der bevorstehenden Datumsangaben der Vielzahl von Datumsangaben vor der bevorstehenden Reisedatumsangabe angibt, durch Anwenden des einen oder der mehreren neuronalen Netzwerkmodelle auf die Eingabereisedaten, die mit der Client-Vorrichtung assoziiert sind.

2. Verfahren gemäß Anspruch 1, wobei das Trainieren jedes der neuronalen Netzwerkmodelle das Bestimmen, durch einen Rechner, für das spezielle neuronale Netzwerkmodell eines entsprechenden Satzes Konfigurationsparameter basierend auf dem Satz einer oder mehrerer historischer Reiseaufzeichnungen für die bevorstehende Datumsangabe, die dem neuronalen Netzwerkmodell entspricht, umfasst.

3. Verfahren gemäß Anspruch 2, wobei das Trainieren des speziellen neuronalen Netzwerkmodells Folgendes umfasst:
Bestimmen, durch den Rechner, einer Genauigkeit zwischen einer vorhergesagten Ausgabe und einer erwarteten Ausgabe des speziellen neuronalen Netzwerkmodells, wie auf den Satz einer oder mehrerer historischer Reiseaufzeichnungen für die bevorstehende Datumsangabe angewendet; und
Anpassen, durch den Rechner, mindestens eines Konfigurationsparameters des neuronalen Netzwerkmodells basierend darauf, dass die Genauigkeit der Vorhersage des ersten neuronalen Netzwerkmodells einen Schwellenwert für das Trainieren nicht erfüllt.

4. Verfahren gemäß Anspruch 1, das ferner das Konstruieren, durch den Rechner, jedes neuronalen Netzwerkmodells der Vielzahl von neuronalen Netzwerkmodellen gemäß einem entsprechenden Satz Konfigurationswerte beinhaltet, wobei der entsprechende Satz Konfigurationswerte mindestens eines von einer Anzahl von Schichten, einer Anzahl von Neuronen und einer Aktivierungsfunktion jedes neuronalen Netzwerkmodells umfasst.

5. Verfahren gemäß Anspruch 4, wobei der Rechner für jedes neuronale Netzwerkmodell den entsprechenden Satz Konfigurationswerte durch Ausführen mindestens einer Optimierungsfunktion bestimmt.

6. Verfahren gemäß Anspruch 4, wobei das Konstruieren des neuronalen Netzwerkmodells gemäß dem entsprechenden Satz Konfigurationswerte Folgendes umfasst:
Bestimmen, durch den Rechner, der eine Simulationsoperation durchführt, einer Genauigkeit einer Vorhersage des ersten neuronalen Netzwerkmodells durch Anwenden des ersten neuronalen Netzwerkmodells auf einen Kandidatensatz Konfigurationswerte.

7. Verfahren gemäß Anspruch 4, wobei das Konstruieren des neuronalen Netzwerkmodells gemäß dem entsprechenden Satz Konfigurationswerte Folgendes umfasst:
Anpassen, durch den Rechner, mindestens eines Konfigurationswertes des neuronalen Netzwerkmodells basierend darauf, dass eine Genauigkeit der Vorhersage des ersten neuronalen Netzwerkmodells einen Schwellenwert für eine Simulationsoperation nicht erfüllt.

8. Verfahren gemäß Anspruch 4, das ferner das Empfangen des Satzes Konfigurationswerte über eine Benutzerschnittstelle von einer Client-Vorrichtung beinhaltet.

9. Verfahren gemäß Anspruch 1, wobei die Vielzahl von historischen Reiseaufzeichnungen zum Trainieren der neuronalen Netzwerkmodelle mindestens ein Attribut beinhaltet, das mindestens eines von Folgendem umfasst: ein Ereignis, das für die bevorstehende Reisedatumsangabe geplant ist, einen speziellen Wochentag, eine spezielle Woche eines Jahres, einen Feiertag oder einen Pandemiestatus eines Orts.

10. Verfahren gemäß Anspruch 1, wobei das neuronale Netzwerkmodell für eine spezielle bevorstehende Datumsangabe mindestens eines von einem konvolutionalen neuronalen Netzwerk, einem tiefen neuronalen Netzwerk, einem rekurrenten neuronalen Netzwerk und einem rekurrenten neuronalen Netzwerk mit langem Kurzzeitgedächtnis beinhaltet.

11. Ein System, das Folgendes beinhaltet:
einen Rechner, der einen oder mehrere Prozessoren beinhaltet, die für Folgendes konfiguriert sind:
Empfangen einer Vielzahl von historischen Reiseaufzeichnungen für eine Vielzahl von bevorstehenden Datumsangaben relativ zu einer bevorstehenden Reisedatumsangabe;
Erzeugen einer oder mehrerer Funktionsschichten einer Vielzahl von neuronalen Netzwerkmodellen einer Maschinenlernarchitektur gemäß einer Vielzahl von Konfigurationen und einer Vielzahl von Konfigurationsparametern von mindestens einem von einer Administratorvorrichtung oder einem Parameterspeicher, wobei die Vielzahl von Konfigurationen zum Konstruieren der Funktionsschichten der neuronalen Netzwerkmodelle eine entsprechende bevorstehende Datumsangabe der Vielzahl von Datumsangaben umfasst;
Anwenden jedes neuronalen Netzwerkmodells auf einen Satz einer oder mehrerer historischer Reiseaufzeichnungen für die bevorstehende Datumsangabe, die dem neuronalen Netzwerkmodell entspricht, und eine entsprechende Trainingsgenauigkeitsschwelle, um das neuronale Netzwerkmodell darauf zu trainieren, einen vorhergesagten Bedarf für die bevorstehende Datumsangabe, die dem neuronalen Netzwerkmodell entspricht, zu erzeugen;
Empfangen von Eingabereisedaten, die mit einer Client-Vorrichtung assoziiert sind, wobei die Eingabereisedaten ein oder mehrere Attribute beinhalten, die die bevorstehende Reisedatumsangabe umfassen; und
Erzeugen eines Berichts zur Anzeige auf einer grafischen Benutzerschnittstelle der Client-Vorrichtung, der einen vorhergesagten Bedarf für die bevorstehende Reisedatumsangabe und jede der bevorstehenden Datumsangaben der Vielzahl von Datumsangaben vor der bevorstehenden Reisedatumsangabe angibt, durch Anwenden des einen oder der mehreren neuronalen Netzwerkmodelle auf die Eingabereisedaten, die mit der Client-Vorrichtung assoziiert sind.

## Revendications

1. Un procédé mis en œuvre par ordinateur comprenant :
la réception, par un ordinateur, d'une pluralité de relevés historiques de déplacements pour une pluralité de dates à venir relatives à une date de déplacement à venir ;
la génération, par l'ordinateur, d'une ou plusieurs couches fonctionnelles d'une pluralité de modèles de réseau neuronal d'une architecture d'apprentissage automatique conformément à une pluralité de configurations et à une pluralité de paramètres de configuration provenant d'au moins l'un d'entre un dispositif d'administration ou une unité de stockage de paramètres, la pluralité de configurations pour la construction des couches fonctionnelles des modèles de réseau neuronal incluant une date correspondante à venir parmi la pluralité de dates ;
l'application, par l'ordinateur, de chaque modèle de réseau neuronal à un ensemble d'un ou plusieurs relevés historiques de déplacements pour la date à venir correspondant au modèle de réseau neuronal et à un seuil d'exactitude d'entraînement correspondant, afin d'entraîner le modèle de réseau neuronal à générer une demande prédite pour la date à venir correspondant au modèle de réseau neuronal ;
la réception, par l'ordinateur, de données de déplacement d'entrée associées à un dispositif client, les données de déplacement d'entrée comprenant un ou plusieurs attributs incluant la date de déplacement à venir ; et
la génération, par l'ordinateur, d'un rapport destiné à être affiché au niveau d'une interface utilisateur graphique du dispositif client indiquant une demande prédite pour la date de déplacement à venir et chacune des dates à venir parmi la pluralité de dates antérieures à la date de déplacement à venir en appliquant les un ou plusieurs modèles de réseau neuronal aux données de déplacement d'entrée associées au dispositif client.

2. Le procédé selon la revendication 1, dans lequel l'entraînement de chacun des modèles de réseau neuronal inclut la détermination, par un ordinateur, pour le modèle de réseau neuronal particulier, d'un ensemble correspondant de paramètres de configuration sur la base de l'ensemble d'un ou plusieurs relevés historiques de déplacements pour la date à venir correspondant au modèle de réseau neuronal.

3. Le procédé selon la revendication 2, dans lequel l'entraînement du modèle de réseau neuronal particulier inclut :
la détermination, par l'ordinateur, d'une exactitude entre une sortie prédite et une sortie attendue du modèle de réseau neuronal particulier telle qu'appliquée à l'ensemble d'un ou plusieurs relevés historiques de déplacements pour la date à venir ; et
l'ajustement, par l'ordinateur, d'au moins un paramètre de configuration du modèle de réseau neuronal sur la base du fait que l'exactitude de la prédiction du premier modèle de réseau neuronal ne réussit pas à satisfaire à une valeur seuil pour l'entraînement.

4. Le procédé selon la revendication 1, comprenant en outre la construction, par l'ordinateur, de chaque modèle de réseau neuronal de la pluralité de modèles de réseau neuronal en conformité avec un ensemble correspondant de valeurs de configuration, dans lequel l'ensemble correspondant de valeurs de configuration inclut au moins l'un d'entre un nombre de couches, un nombre de neurones, et une fonction d'activation de chacun des modèles de réseau neuronal.

5. Le procédé selon la revendication 4, dans lequel, pour chaque modèle de réseau neuronal, l'ordinateur détermine l'ensemble correspondant de valeurs de configuration en exécutant au moins une fonction d'optimisation.

6. Le procédé selon la revendication 4, dans lequel la construction du modèle de réseau neuronal en conformité avec l'ensemble correspondant de valeurs de configuration inclut :
la détermination, par l'ordinateur effectuant une opération de simulation, d'une exactitude d'une prédiction du premier modèle de réseau neuronal en appliquant le premier modèle de réseau neuronal à un ensemble candidat de valeurs de configuration.

7. Le procédé selon la revendication 4, dans lequel la construction du modèle de réseau neuronal en conformité avec l'ensemble correspondant de valeurs de configuration inclut :
l'ajustement, par l'ordinateur, d'au moins une valeur de configuration du modèle de réseau neuronal sur la base du fait qu'une exactitude de la prédiction du premier modèle de réseau neuronal ne réussit pas à satisfaire à une valeur seuil pour une opération de simulation.

8. Le procédé selon la revendication 4, comprenant en outre la réception de l'ensemble de valeurs de configuration via une interface utilisateur à partir d'un dispositif client.

9. Le procédé selon la revendication 1, dans lequel la pluralité de relevés historiques de déplacements pour l'entraînement des modèles de réseau neuronal comprend au moins un attribut, incluant au moins l'un d'entre : un événement programmé à la date de déplacement à venir, un jour particulier d'une semaine, une semaine particulière d'une année, un jour férié, ou un statut pandémique d'un lieu.

10. Le procédé de la revendication 1, dans lequel le modèle de réseau neuronal pour une date à venir particulière comprend au moins l'un d'entre un réseau neuronal convolutif, un réseau neuronal profond, un réseau neuronal récurrent, et un réseau neuronal récurrent LSTM (à mémoire longue à court terme).

11. Un système comprenant :
un ordinateur comprenant un ou plusieurs processeurs configurés pour :
recevoir une pluralité de relevés historiques de déplacements pour une pluralité de dates à venir relatives à une date de déplacement à venir ;
générer une ou plusieurs couches fonctionnelles d'une pluralité de modèles de réseau neuronal d'une architecture d'apprentissage automatique conformément à une pluralité de configurations et à une pluralité de paramètres de configuration provenant d'au moins l'un d'entre un dispositif d'administration ou une unité de stockage de paramètres, la pluralité de configurations pour la construction des couches fonctionnelles des modèles de réseau neuronal incluant une date correspondante à venir parmi la pluralité de dates ;
appliquer chaque modèle de réseau neuronal à un ensemble d'un ou plusieurs relevés historiques de déplacements pour la date à venir correspondant au modèle de réseau neuronal et à un seuil d'exactitude d'entraînement correspondant, afin d'entraîner le modèle de réseau neuronal à générer une demande prédite pour la date à venir correspondant au modèle de réseau neuronal ;
recevoir des données de déplacement d'entrée associées à un dispositif client, les données de déplacement d'entrée comprenant un ou plusieurs attributs incluant la date de déplacement à venir ; et
générer un rapport destiné à être affiché au niveau d'une interface utilisateur graphique du dispositif client indiquant une demande prédite pour la date de déplacement à venir et chacune des dates à venir parmi la pluralité de dates antérieures à la date de déplacement à venir en appliquant les un ou plusieurs modèles de réseau neuronal aux données de déplacement d'entrée associées au dispositif client.
